# EUROPEAN PATENT APPLICATION

(11) **EP 4 443 433 A1**
(43) Date of publication of application: **09.10.2024**
(21) Application number: 24168215.2
(22) Date of filing: 03.04.2024
(51) Int. Cl.: G10L 21/057

(54) **AUDIO ADJUSTMENT BASED ON COLOCATION OF USERS**

(30) Priority: 03.04.2023 US 202363456731 P; 28.03.2024 US 202418619811
(71) Applicant: Meta Platforms Technologies, LLC, Menlo Park, CA 94025 (US)
(72) Inventor: Ivanov, Plamen Alexandrov, Menlo Park (US); Kelloniemi, Antti, Menlo Park, 94025 (US)
(74) Representative: Murgitroyd & Company

(57) **Abstract**

Systems, apparatuses and methods identify first data associated with a first user and determines whether a second user is colocated with the first user based on the first data. The systems, apparatuses and methods receive first audio data associated with the first user, and second audio data associated with the second user, and responsive to a determination that the second user is colocated with the first user, one or more of determine that a first audio feed to the first user will exclude the second audio data, or determine that a second audio feed to the second user will exclude the first audio data, and generate one or more of the first audio feed or the second audio feed.

## Description

### TECHNICAL FIELD

The present application relates generally to methods and devices for distinguishing between local and remote users, in particular to facilitate rendering the appropriate mix of voices for each user.

### BACKGROUND

With the advent of the internet, various forms of communication have been adopted. For example, the internet may enable messages, voice, audio, video and other forms of communication to be rapidly transmitted between different computing devices. Additionally, the communication may be applied to a variety of contexts, ranging from teleconferencing to video gaming.

### SUMMARY

A system of one or more computers may be configured to perform particular operations or actions by virtue of having software, firmware, hardware, or a combination of them installed on the system that in operation causes or cause the system to perform the actions. One or more computer programs may be configured to perform particular operations or actions by virtue of including instructions that, when executed by data processing apparatus, cause the apparatus to perform the actions.

According to a first aspect, there is provided a method comprising: identifying first data associated with a first user; determining whether a second user is colocated with the first user based on the first data; receiving first audio data associated with the first user, and second audio data associated with the second user; and responsive to a determination that the second user is colocated with the first user, one or more of determining that a first audio feed to the first user will exclude the second audio data, or determining that a second audio feed to the second user will exclude the first audio data, and generating one or more of the first audio feed or the second audio feed.

Determining whether the second user is colocated with the first user may comprise extracting a first audio signal from the first data and analyzing the first audio signal to detect whether the second user is colocated with the first user.

The method may further comprise determining a first speech signal based on the first audio signal. The method may further comprise determining a second audio signal associated with the second user based on second data associated with the second user. Determining whether the second user is colocated with the first user may comprise determining a similarity of the first speech signal and the second audio signal.

The method may further comprise determining a second audio signal associated with the second user based on second data associated with the second user. The method may further comprise determining a first portion of the first audio signal that corresponds to background noise. The method may further comprise determining a second portion of the second audio signal that corresponds to background noise. Determining whether the second user is colocated with the first user may comprise determining whether the first portion matches the second portion.

The first data may include first visual data. Determining whether the second user is colocated with the first user may comprise comparing second data associated with the second user to the first visual data.

The first data may include a broadcasted identification information from a computing system associated with the second user. Determining whether the second user is colocated with the first user may comprise determining that the broadcasted identification information corresponds to the second user.

The first data may be an infrastructure-based notification. To determine whether the second user is colocated with the first user, the method may further comprise determining that the infrastructure-based notification includes first identification data that corresponds to a first user device of the first user, and second identification data that corresponds to a second user device of the second user.

The method may further comprise determining whether to execute colocation detection and mitigation based on a selection by one or more of the first user or the second user.

According to a second aspect, there is provided at least one computer readable storage medium comprising a set of instructions which, when executed by a computing device, cause the computing device to carry out the method of the first aspect.

According to a third aspect, there is provided a system comprising: one or more processors; and a memory coupled to the one or more processors, the memory comprising instructions executable by the one or more processors, the one or more processors being operable when executing the instructions to carry out the method of the first aspect.

According to a fourth aspect, there is provided a computer program product comprising instructions which, when the program is executed by a computer, cause the computer to carry out the method of the first aspect.

### BRIEF DESCRIPTION OF THE DRAWINGS

The various advantages of the examples will become apparent to one skilled in the art by reading the following specification and appended claims, and by referencing the following drawings, in which:
FIGs. 1A, 1B, 1C and 1D illustrate a networked communication architecture according to an example of the disclosure;
FIG. 2 illustrates a first adaptive filter based colocation detector according to an example of the disclosure;
FIG. 3 illustrates a second adaptive filter based colocation detector according to an example of the disclosure;
FIG. 4 illustrates a colocation apparatus according to an example of the disclosure;
FIG. 5 is a flowchart of an example of a method to determine colocation according to an example of the disclosure;
FIGS. 6A-6B illustrates an HMD colocation process architecture according to some examples of the disclosure;
FIG. 7 illustrates an example network environment associated with a social-networking system according to an example of the disclosure;
FIG. 8 illustrates an example social graph according to an example of the disclosure; and
FIG. 9 illustrates an example computer system according to an example of the disclosure.

### DETAILED DESCRIPTION

Multiple users may participate in online communication. For example, virtual reality (VR) and/or augmented reality (AR) environments involve multiple users that communicate with each other. In such examples, the users may be physically positioned proximate each other, both in a VR and/or AR space as well as physically in the real-world. In order to communicate, users may speak into microphones, and audio signals of the users are then transmitted to other users that are present in the VR and/or AR space. If some of the users are colocated (e.g., physically located proximate each other and able to hear each other in the real-world over the air), such users may have sub-optimal experiences.

That is, suppose that a first user is co-located with a second user. The first users and the second users may be wearing first and second head-mounted displays (HMDs) respectively. If the first user verbalizes a verbal communication, the second user may hear two different and asynchronous instances of the verbal communication. That is, the second user may hear a first instance of the verbal communication in the real-world (e.g., through the air), then hear a second instance of the verbal communication through the virtual space (e.g., via a speaker, headset, or other audio device of the second HMD). Further, the second user may asynchronously receive the first and second instances. That is, there may be little to no delay in receiving the first instance since the first and second users are co-located. The second instance may be generated by the first HMD of the first participant (who may be local or remote, but is local in this example), is then is transmitted to a server, and then the server transmits the second instance to every participant in the virtual space through a communication medium (e.g., internet), causing a delay in receiving the second instance. In some instances, the second instance may be generated by a server. Such instances are disruptive (e.g., same communication being received twice by the same user at different times) causing disorientation and degrading the user experience. Further, generating and transmitting the second instance consumes unnecessary compute resources and bandwidth. Indeed, bandwidth is a significant constraint in internet communications, particularly in applications that rely heavily on data transfer (e.g., AR and VR applications). Excessive bandwidth usage may result in technical complications (e.g., judder, dropped data packets, delays, etc.) that may negatively impact computing devices and user experience.

Some existing examples use global positioning systems (GPS) to locate each one of the devices participating in a group call and assign global coordinates to these devices based on the coordinates. The existing examples may estimate the distance between the devices to determine proximity and colocation. Such existing systems are suboptimal as discussed below.

The GPS system of coordinates provides general positioning information with low resolution (e.g., on the order of meters) which is insufficient for detecting colocation from a sound perspective. In order to address the above, existing examples may attempt to execute a precise determination of colocation of the users by accurately mapping the interior of the buildings in which the users are located. That is, the accurate mapping may be required since even though the users are in close physical proximity to one another, the users may be located in adjacent rooms, and not within hearing distance (e.g., earshot) of each other. Generating such accurate mapping relies heavily on accurate building designs, which often times are inaccessible, often change due to reconfiguration and may not exist. Further, the mapping consumes significant computing resources to store the building designs and analyze the building designs based on GPS coordinates to detect colocation. Furthermore, such existing examples still rely heavily on GPS coordinates which have low resolution (e.g., may provide a user location as being in meters long area) or may not be accessible indoors. Therefore, it may be impossible to determine which room the user is positioned since the GPS coordinates may be within multiple rooms. Thus, existing examples are suboptimal, provide inaccurate colocation information and consume excess compute resources.

Therefore, enhanced examples herein implement a technical solution to the technical problems described and enhance user experience, reduce compute resources and memory, as well as result in a higher accuracy colocation detection process. Accordingly, examples herein implement the above technical solution to allow teleconferencing using computing systems (e.g., VR/AR devices) to distinguish between local and remote users, to facilitate rendering the appropriate mix of voices for each user. At present, no such solution exists, and the capabilities of the current technology do not adequately address this colocation problem.

Examples herein may remedy the above drawbacks and technical complications that are particular to communications of computing devices and/or systems with each other. To do so, examples, identify first data associated with a first user, determine whether a second user is colocated with the first user based on the first data, receive first audio data associated with the first user, and second audio data associated with the second user, and responsive to a determination that the second user is colocated with the first user, one or more of determine that a first audio feed to the first user will exclude the second audio data, or determine that a second audio feed to the second user will exclude the first audio data, and generate one or more of the first audio feed or the second audio feed.

That is, examples may identify that users are co-located and bypass emitting and/or providing audio data to the users in such situations. For example, if a first user is co-located with a second user, examples herein avoid providing an audio output of the first user to the second user and avoid providing an audio output of the second user to the first user. As a consequence, examples may enhance user experience by avoiding the disruptive experiences noted above, reduce compute resources, reduce memory usage, reduce bandwidth and operate in real-time. For example, since audio data (e.g., voices) is not unnecessarily provided to co-located users in some examples (e.g., when server detects colocation), bandwidth usage may be reduced relative to examples where a server provides and processes the audio data. Moreover, since existing examples do not rely on GPS coordinates, examples may accurately detect colocation in real-time with less compute resource and memory usage. Thus, examples enhance technical designs and result in enhanced computing architectures that operate with less latency, less overhead, less bandwidth and with an enhanced user experience.

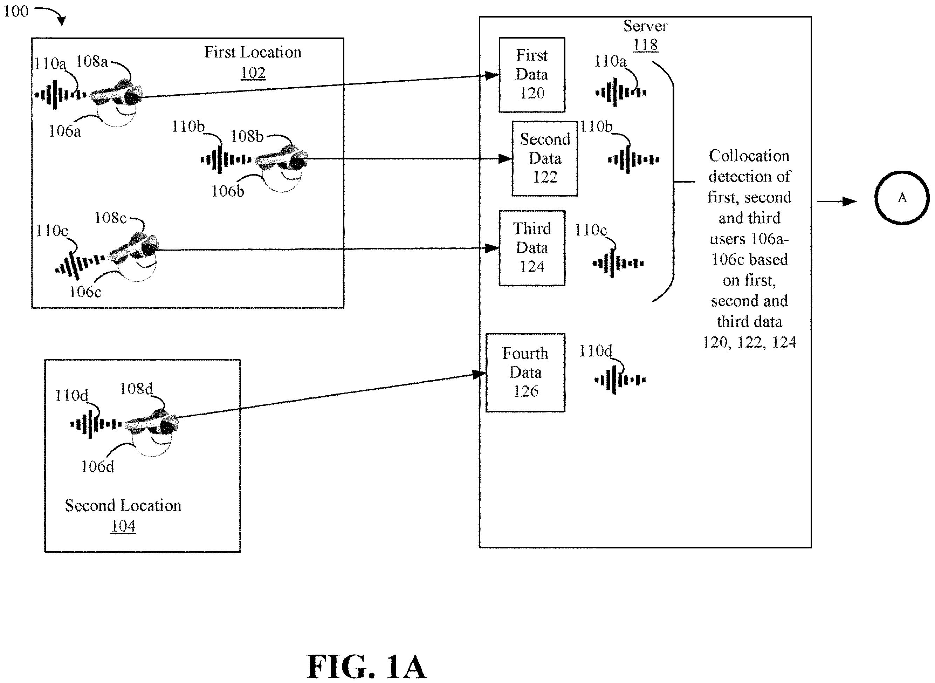

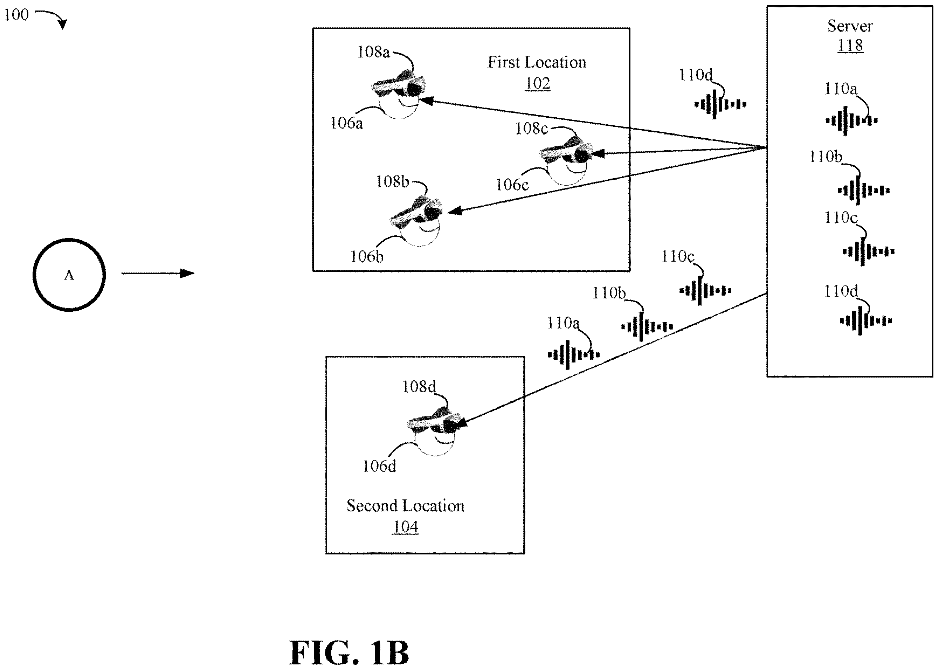

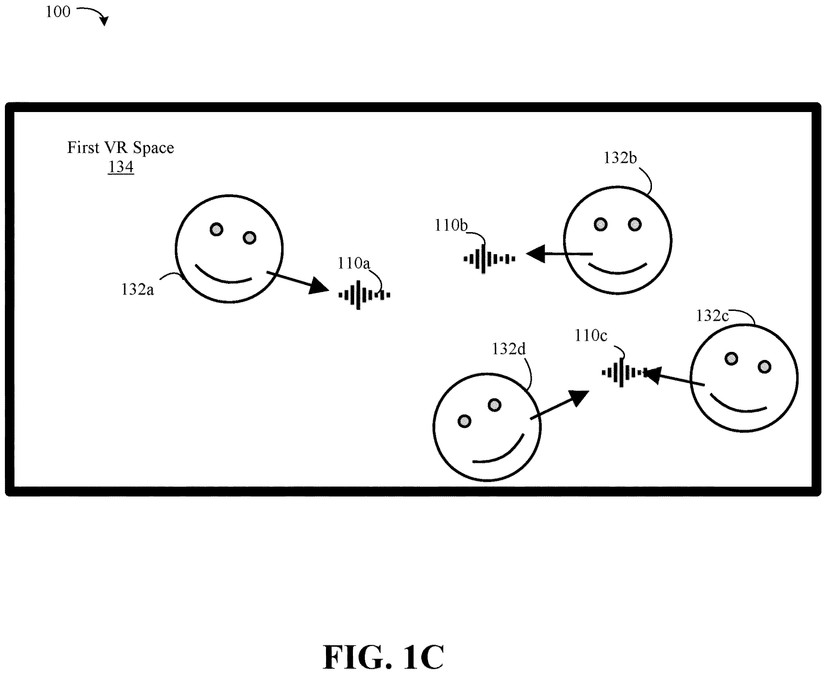

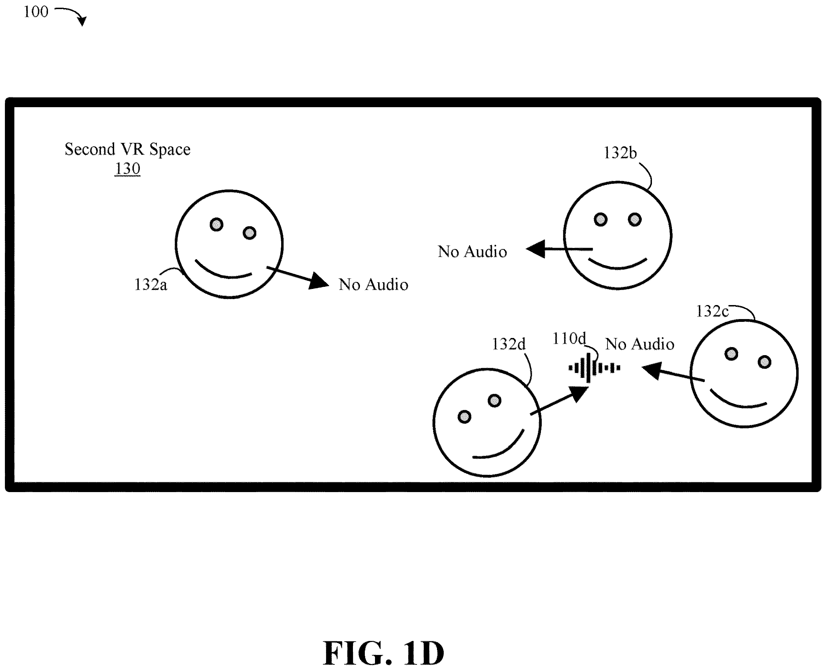

Turning now to FIGs. 1A, 1B, 1C and 1D, a networked communication architecture 100 is illustrated. The networked communication architecture 100 may be implemented in a computing device including a memory and processor, computing system (e.g., hardware, configurable logic, fixed-function logic hardware, at least one computer readable storage medium comprising a set of instructions for execution, etc.).

Networked communication architecture 100 includes communication devices, which in this example include first-fourth VR headsets 108a, 108b, 108c, 108d. The first-fourth VR headsets 108a, 108b, 108c, 108d may include communication capabilities as well as video capabilities to implement VR environments as illustrated in VR spaces 134, 130 (FIGS. 1C and 1D).

In this example, a first user 106a wears the first VR headset 108a. The first VR headset 108a may include a microphone to obtain first audio data 110a of the first user 106a. Similarly, a second user 106b wears the second VR headset 108b. The second VR headset 108b may include a microphone to obtain second audio data 110b of the second user 106b. Likewise, a third user 106c wears the third VR headset 108c. The third VR headset 108c may include a microphone to obtain third audio data 110c of the third user 106c. Further, a fourth user 106d wears the fourth VR headset 108d. The fourth VR headset 108d may include a microphone to obtain fourth audio data 110d of the fourth user 106d.

The first-fourth users 106a-106d may be actively participating in a VR experience that is controlled with server 118. Part of the VR experience includes communication between the first-fourth users 106a-106d. That is, the first-fourth users 106a-106d communicate with each other in the VR experience.

To facilitate the communication process, the first-fourth VR headsets 108a-108d may provide first data 120, second data 122, third data 124 and fourth data 126 to server 118. The server 118 may analyze the first data 120, second data 122, third data 124 and fourth data 126 to detect colocation among the first-fourth users 106a-106d.

In some examples, the colocation may be detected based on audio. For example, the first data 120, second data 122, third data 124 and fourth data 126 may be audio signals that are detected by the first-fourth VR headsets 108a-108d. For example, the first VR headset 108a may detect sound in a proximity of the first user 106a, and transmit the detected sound as the first data 120. The second VR headset 108b may detect sound in a proximity of the second user 106b, and transmit the detected sound as the second data 122. The third VR headset 108c may detect sound in a proximity of the third user 106c, and transmit the detected sound as the third data 124. The fourth VR headset 108d may detect sound in a proximity of the fourth user 106d, and transmit the detected sound as the fourth data 126. Thus, the first data 120 may be a first audio signal, the second data 122 may be a second audio signal, the third data 124 may be a third audio signal and the fourth data 126 may be a fourth audio signal.

The server 118 may therefore analyze audio from the microphones (or other sound sensor) on the first-fourth VR headsets 108a-108d and utilizes the notion that similarity will exist in the first-fourth audio signals if the first-fourth users 106a-106d are physically colocated. The first-fourth audio signals include a collection of signals that comprise an output of a capture pipeline of the first-fourth headsets 108a-108d (e.g., head-mounted displays), and/or microphone signals of the first-fourth headsets 108a-108d. Other signals, such as GPS coordinates, unique identification information of the first-fourth headsets 108a-108d is also available and may be encoded in the first, second, third and fourth data 120, 122, 124, 126 as metadata.

The first data 120, second data 122, third data 124 and fourth data 126 may be raw audio data. The server 118 may process the raw audio data to remove extraneous noise (e.g., distractors, additive environment noises, device noises, acoustic echo, room response and other interference) and only include the voice of a respective user of the first user 106a, second user 106b, third user 106c and fourth user 106d. In some examples, an output signal of the capture pipeline of each of the first VR headset 108a-fourth VR headset 108d contains only the voice of the respective first-fourth user 106a-106d wearing the first VR headset 108a-fourth VR headset 108d. That is, the first VR headset 108a-fourth VR headset 108d may include signal processing components that remove all other distractors, additive environment noises, device noises, acoustic echo, room response and other interference. In either scenario, the server 118 may determine colocation based on the voices of the first-fourth users 106a-106d.

The raw microphone signals on the other hand contain the voice of the user, as well as all the other environmental noise and interference, such as nearby talkers, or noise sources in the room. In some examples, further data may be analyzed to determine colocation. For example, when multiple users are in conference mode, metadata such as global positioning satellite (GPS) coordinates (or similarity in the magnetometer or other device sensor reading, or being connected to the same physical network access point, etc.) may be used to form a basis for possible colocation (e.g., users within earshot of each other), which may then be further reviewed. For example, initially the metadata may first be analyzed to detect whether colocation may exist, and if so, then the first data 120, second data 122, third data 124 and fourth data 126 may be analyzed. Furthermore, the function of colocation detection and mitigation may be enabled, disabled or overwritten at will by the first VR headset 108a-fourth VR headset 108d, and/or by first user 106a-fourth user 106d.

Different techniques may be employed to determine physical colocation between a given user of the first-fourth users 106a-106d and each one of the remaining users of the first-fourth users 106a-106d. These techniques are discussed below.

In one technique, an adaptive filter solution is employed. An adaptive filter is set to perform a system identification task for a pair of users. For example, each one of the first-fourth users 108a-108d may be paired and tested against all other of the first-fourth users 108a-108d.

Thus, the adaptive filter may test a pair of users from the first-fourth users 106a-106d to determine if the pair of users are colocated. A reference audio signal may be provided to the adaptive filter. The reference audio signal may be a cleaned audio output and is generated from one of the first-fourth data 120, 122, 124, 126. For example, extraneous noise may be removed from the one of the first-fourth data 120, 122, 124, 126 to generate the reference audio signal. The reference audio signal may comprise only the voice of one user of the pair of users. Another input of the adaptive filter may be the raw microphone signal from the other user in the pair of users, which may not be adjusted to remove extraneous noise. If the pair of users are physically colocated, the microphone signal of the other user will contain a speech signal that is also present in the reference audio signal.

For example, suppose that the first user 106a and the second user 106b are tested for colocation. The first audio signal of the first data 120 may be provided to the adaptive filter. The adaptive filter may be implemented by and/or as part of the server 118. The reference audio signal may be a cleaned audio output (e.g., eliminate all sounds except first voice of the first user 106a) of the first audio signal, and includes the first voice of the first user 106a. The other input to the adaptive filter may be the second data 122 (e.g., raw microphone signal from the second VR headset 108b), which may not be adjusted or cleaned to remove extraneous noise. Since the first user 106a and the second user 106b are colocated, the second data 122 will contain a speech signal that is also present in the reference audio signal. That is, the speech signal of the second data 122 matches the first voice of the first user 106a recorded in the first data 120.

In some examples, the adaptive filter may include machine learning model(s) that are trained to find the similarity (e.g., coherence, similar signals, matching signals, etc.) between the reference and raw microphone signal. The adaptive filter may determine coherence only when target speech present in the reference signal is present in the raw microphone signal, which indicates physical colocation.

In some examples, the server 118 may employ a background and/or foreground analysis to identify colocation. In the background analysis, microphones of the first-fourth VR headsets 108a-108d capture audio from each of the first-fourth VR headsets 108a-108d. Pairs of the first-fourth users 106a-106d are analyzed to detect similarity.

For example, suppose that the first data 120 and second data 122 contain unprocessed audio data (e.g., has background noise and is not filtered to remove sounds) of areas surrounding the first user 106a and the second user 106b. The unprocessed audio data may be analyzed to detect similarity in the background (e.g., during speech absence) in the unprocessed audio data (e.g., microphone streams). That is, the unprocessed data of the first data 120 may be compared to the unprocessed data to the second data 122 to detect whether similarity exists in the background sounds (e.g., a thud at the same time, similar music, background talking is the same, etc.). Similarity is measured by estimating correlations, or coherence between the unprocessed audio data of the first data 120 and second data 122 in the respective conditions and comparing the signal pairs to a pre-set or learned threshold indicating match. Similarity may also be measured by training machine learning (ML) models to detect the presence of speech targets in signal mixtures. Similarity found between the unprocessed audio data may be used to detect physical colocation. Similarity between the background noise or detection of specific audio events occurring at nearly equal times when comparing two or more audio data streams may also be used to detect physical colocation.

In the foreground analysis, the voice signal of one user of the first user 106a-fourth user 106d may be extracted and analyzed similar to the adaptive filter described above. The voice signal may be analyzed by comparing speech to other unprocessed audio streams (e.g., audio streams are not processed to extract a particular voice signal), particularly when the speech occurs. For example, suppose that the server 118 analyzes the first data 120 to extract the first audio data 110a (e.g., a first voice signal) of the first user 106a. The first audio data 110a may be compared to raw audio data of the second data 122 to detect if the first audio data 110a is present in the second data 122. Similarly, the server 118 may compare the first audio data 110a to the third data 124 and the fourth data 126 to determine if the first audio data 110a is present in the third data 124 and fourth data 126. Similar to the above, similarity is measured by estimating correlations, and/or coherence between the voice signal and unprocessed audio data in the respective conditions and comparing the voice signal and the unprocessed audio data to a pre-set or learned threshold indicating a match. Similarity may also be measured by training ML models to detect presence of speech targets in unprocessed audio data (e.g., signal mixtures). Similarity found between microphone streams may be used to detect physical colocation.

In some examples, the server 118 may employ a blind source separation approach to detect colocation. As described above, microphone signals and capture outputs from the first VR headset 108a-fourth VR headset 108d are obtained and stored as first data 120, second data 122, third data 124 and fourth data 126. The microphone signals and capture outputs are interpreted as a signal from an ad-hoc microphone array and are used to perform blind source separation during speech segments. Blind source separation includes the separation of a set of source signals from a set of mixed signals, with little to no aid of information about the source signals or the mixing process.

The microphone array described in blind source separation may describe processing of the signals from a combination of microphones. The idea of using blind source separation utilizes the microphone array of the first VR headset 108a-fourth VR headset 108d as follows. From the multiple microphones on each respective VR headset of the first VR headset 108a-fourth VR headset 108d (each seeing a mixture of speech sources and noises in the environment), the respective VR headset separates all unique speech sources and/or and identifies and/or labels the speech sources. The respective VR headset compares the separated unique speech sources, or background noises to the "reference" signals that are received from all the other VR headsets of the first VR headset 108a-fourth VR headset 108d (e.g., provided as transmissions and encoded data from the first VR headset 108a-fourth VR headset 108d) representing avatar speech, or from the raw mics on the other first VR headset 108a-fourth VR headset 108d. Finding similarity in the speech (or noise) sources between the respective VR headset's own signal set and the signals received from the other the first VR headset 108a-fourth VR headset 108d is used to declare colocation.

Similarity of the speech signal in the separated streams from each of the audio capture devices (e.g., microphones) of the first VR headset 108a, second VR headset 108b, third VR headset 108c and fourth VR headset 108d to the processed/denoised signal that is determined from one of the first data 120, second data 122, third data 124 and fourth data 126 is used to indicate colocation. Similarity may be measured via correlation or coherence between the signals during speech segments, or using ML models, as described above.

In some examples, the first data 120, second data 122, third data 124 and fourth data 126 are video information from cameras of the first VR headset 108a-fourth VR headset 108d. For example, the first VR headset 108a-fourth VR headset 108d may capture visual images of the surroundings of the first user 106a-fourth user 106d. The visual images may be stored as the first data 120, the second data 122, the third data 124 and the fourth data 126. The visual images (e.g., a video) are analyzed to determine physical colocation. For example, if the first data 120 has an image of a particular object that is present in the second data 122, the first user 106a and the second user 106b may be determined to be colocated.

Further, when the server 118 analyzes the video information to determine colocation, the server 118 may analyze metadata from each of the first VR headset 108a-fourth VR headset 108d to facilitate the process. For example, the first data 120, second data 122, third data 124 and fourth data 126 may contain identifying information for the first VR headset 108a-fourth VR headset 108d (e.g., such as serial number, identification number, quick response code, etc.) in addition to the visual images. For example, the first data 120 may contain first identifying information of the first VR headset 108a. The second data 122 may contain second identifying information of the second VR headset 108b. The third data 124 may contain third identifying information of the third VR headset 108c. The fourth data 126 may contain fourth identifying information of the fourth VR headset 108d. Each respective device of the first VR headset 108a, second VR headset 108b, third VR headset 108c, fourth VR headset 108d may have a visible marking or identifier (e.g., corresponding to or being the identifying information) on the respective device. The video information may be analyzed to determine colocation based on the visible marking or identifier, as well as the identifying information.

For example, suppose that the first VR headset 108a captures visual images of the second VR headset 108b and third VR headset 108c. The visual images may be stored as the first data 120. The server 118 analyzes the first data 120 to detect the second VR headset 108b and the third VR headset 108c. Further, the server 118 may analyze the portions of the images that display the second VR headset 108b and the third VR headset 108cto detect visible markings and/or identifiers of the second VR headset 108b and third VR headset 108c. The second data 122 and the third data 124 may further contain metadata that includes identification data of the second VR headset 108b and the third VR headset 108c.

The server 118 may determine if the identification data (e.g., a serial number) of the second VR headset 108b matches one of the visible markings and/or identifiers (e.g., serial number is in the image on the second VR headset 108b). In this example, the server 118 determines that the identification data of the second VR headset 108b matches the one of the visible markings and/or identifiers. Based on the determination that the identification data of the second VR headset 108b matches the first of the visible markings and/or identifiers, the server 118 determines that the first user 106a is colocated with the second user 106b.

Furthermore, the server 118 may determine if the identification data (e.g., an identifying mark) of the third VR headset 108c matches a second of the visible markings and/or identifiers (e.g., identifying mark is in the image on the third VR headset 108c). In this example, the server 118 determines that the identification data of the third VR headset 108c matches the second of the visible markings and/or identifiers. Based on the determination that the identification data of the third VR headset 108c matches the second of the visible markings and/or identifiers, the server 118 determines that the first user 106a is colocated with the third user 106c.

In some examples, the images may contain QR codes that are on the second VR headset 108b and the third VR headset 108c. The QR codes may link to identifying data of the second VR headset 108b and the third VR headset 108c. The identifying data may then be compared to the identification data of the second data 122 and the third data 124 to detect colocation.

In some examples, the server 118 may use broadcasted identification from each of the first VR headset 108a-fourth VR headset 108d to determine physical colocation. For example, metadata from each of the first VR headset 108a-fourth VR headset 108d may contains identifying information for the first VR headset 108a-fourth VR headset 108d (e.g., serial number and/or other unique identifier). Each HMD (e.g., first VR headset 108a-fourth VR headset 108d) broadcasts ID information in the form of infrared, thermal, acoustic, ultrasound, near-field radio, electro-magnetic transmission, and/or other form of signals. Colocation may be determined, based on the detection of the identifiable signal by one of the first user 106a-fourth user 106d from another user of the of the first user 106a-fourth user 106d. The detection may occur with sensors on the first VR headset 108a-fourth VR headset 108d, or with infrastructure elements in first location 102 and second location 104.

For example, suppose that the first VR headset 108a receives broadcast transmissions from the second VR headset 108b and the third VR headset 108c providing identifying data of the second VR headset 108b and the third VR headset 108c. The first VR headset 108a may provide the identifying data to the server 118. The server 118 may then determine based on the identifying data, that the first user 106a is colocated with the second user 106b and the third user 106c. Similarly, broadcasted identifying data in the second data 122 may correspond to the first VR headset 108a and the third VR headset 108c, and broadcasted identifying data in the third data 124 may correspond to the first VR headset 108a and the second VR headset 108b. Based on as much, the server 118 may determine that the first user 106a, second user 106b and the third user 106c are colocated. In some examples, once the first data 120 is analyzed to detect colocation exists between the first VR headset 108a, second VR headset 108b and third VR headset 108c, the second data 122 and third data 124 may be bypassed for analysis to preserve compute resources. That is, analysis may be ceased based on the detection of colocation, as well as the second data 122 and third data 124 being associated with the second user 106b and the third user 106c that are already identified as being colocated with the first user 106a.

In some examples, the server 118 analyzes infrastructure-based identification associated with the first VR headset 108a-fourth VR headset 108d to detect colocation. That is, metadata (e.g., unique identifiers such as serial number) from each of the first VR headset 108a-fourth VR headset 108d may be stored in the first data 120, second data 122, third data 124 and fourth data 126. Furthermore, each of the first VR headset 108a-fourth VR headset 108d has a unique identifier in the form of a visual design element (e.g., thermal identifier, infrared identifier, etc.) and/or unique transmitter (e.g., RFID tag, IP address, etc.). The visual design element and/or the unique transmission may be captured by an infrastructure hardware device (e.g., camera, RFID sensor, IR sensor, thermal sensor, WiFi router etc.) of the first location 102 and transmitted to the server 118. Notably, the infrastructure hardware device may be separate from the first VR headset 108a-fourth VR headset 108d and not under the control of the first user 106a-fourth user 106d. Colocation may be determined when the visual design elements and/or if the unique transmission matches data contained in the metadata.

For example, suppose that the metadata of first data 120, metadata of the second data 122 and metadata of the third data 124 matches the visual design elements and/or unqiue transmission captured by the infrastructure element. In such an example, the corresponding first user 106a, second user 106b and third user 106c may be deemed to be colocated.

In this example, the server 118 detects that the first user 106a, second user 106b and the third user 106c are colocated in the first location 102 based on first, second and third data 120, 122, 124. The server 118 may employ one or more of the techniques described above to determine colocation. Colocation may mean that the first user 106a, second user 106b and third user 106c are positioned closely enough to each other to be able to hear each other through the air in the real-world.

Turning to FIG. 1B, the server 118 determines that only the fourth audio data 110d should be transmitted to the first VR headset 108a, second VR headset 108b third VR headset 108c since the first user 106a, second user 106b and third user 106c are determined to be colocated (e.g., within a predetermined proximity to each other and able to hear each other). In doing so, examples may reduce bandwidth for transmissions, reduce power consumption on the first VR headset 108a-third VR headset 108c by not processing and emitting unnecessary and distracting sounds (e.g., voices) corresponding to the first audio data 110a, second audio data 110b and third audio data 110c, and enhance user experience. The first VR headset 108a, second VR headset 108b and third VR headset 108c may receive the fourth audio data 110d and emit sounds, for example a voice of the fourth user 106d, on headphones of the first VR headset 108a-third VR headset 108c. That is, a first audio feed to the first user 106a will exclude the second and third audio data 110b, 110c, a second audio feed to the second user 106b will exclude the first and third audio data 110a, 110c, and a third audio feed to the third user 106c will exclude the first and second audio data 110a, 110b.

The fourth user 106d is determined to not be colocated with the first user 106a, second user 106b and third user 106c since the fourth user 106d is in the second location 104. That is, the fourth user 106d is unable to hear voices of the first user 106a, second user 106b and third user 106c in the real-world and over the air. Therefore, the fourth VR headset 108d receives the first audio data 110a, second audio data 110b and third audio data 110c. The fourth VR headset 108d may receive the first audio data 110a, second audio data 110b and third audio data 110c and emit sounds, for example a voice of the fourth user 106d, on headphones of the fourth VR headset 108d.

Turning now to FIG. 1C, a first VR space 134 is illustrated. The first VR space 134 may be presented to the fourth user 106d through the fourth VR headset 108d. A first avatar 132a may correspond to the first user 106a, second avatar 132b may correspond to the second user 106b, third avatar 132c may correspond to the third user 106c, and fourth avatar 132d may correspond to the fourth user 106d. Since the fourth user 106d is not colocated with the first user 106a-third user 106c, the first avatar 132a-third avatar 132c emit sounds based on the first audio data 110a-third audio data 110c.

Turning now to FIG. 1D, a second VR space 130 is illustrated. The second VR space 130 may be presented to the first user 106a-third user 106c through the first VR headset 108a-third VR headset 108c. The second VR space 130 may be adjusted based on the colocation noted above. The first-fourth avatars 132a-132d are present in the second VR space 130. Notably, the first avatar 132a, second avatar 132b and third avatar 132c do not emit any sound since the first user 106a, second user 106b and third user 106c are colocated (e.g., can hear each other in the real-world). That is, the first avatar 132a, second avatar 132b and third avatar 132c have first-third audio feeds that do not emit sounds based on the first audio data 110a, second audio data 110b and third audio data 110c. The fourth avatar 132d emits sounds based on the fourth audio data 110d since the fourth user 106d is not colocated with the first user 106a-third user 106c.

Thus, the second VR space 130 and first VR space 134 differ from each other based on the colocation and are generated based on colocation. Therefore, the first VR space 134 and second VR space 130 are uniquely generated based on colocation. Notably, the server 118 may generate and provide the second VR space 130 and first VR space 134.

In some examples, the networked communication architecture 100 may implement a conferencing system ("system") that accounts for co-located conference participants, which may be the first user 106a-fourth user 106d. In some examples, the conferencing system is for AR environments. The system may be integrated into one or more conferencing devices, which may be the first VR headset 108a-fourth VR headset 108d, that deliver audio content directly to the user (e.g., via headset, earbuds, ultrasonic speaker array, etc.). In some examples, rather than or in addition to the first VR headset 108a-fourth VR headset 108d, the conferencing devices may be smart phones, laptops, tables, headsets, conferencing servers, or some combination thereof, that is configured to directly deliver audio content to the user.

It is worthwhile to note that the server 118 has been described as determining the colocation based on the first data 120, second data 122, third data 124 and fourth data 126. In some examples, the first VR headset 108a-fourth VR headset 108d may determine whether the first user 106a-fourth user 106d are colocated based on first data 120, second data 122, third data 124, fourth data 126 that is shared between the first VR headset 108a, 108b, third VR headset 108c, fourth VR headset 108d. For example, each of the first VR headset 108a-fourth VR headset 108d may include a process, program, and/or thread that is executed on each first VR headset 108a-fourth VR headset 108d that detects colocation as described above. Each of the first VR headset 108a-fourth VR headset 108d may execute a service and/or application programming interface performing the colocation detection and mitigation against all of the first user 106a-fourth user 106d or subsets of the first user 106a-fourth user 106d. The process or program that may be executed in the local settings (e.g., router, local area network and/or /wide area network element), network and/or cloud-based element.

In some examples, the conferencing devices may be eyewear device (e.g., eye glasses form factor). In some examples, the first VR headset 108a-fourth VR headset 108d may be implemented as a head-mounted display (HMD) as illustrated by first VR headset 108a-fourth VR headset 108d. The first VR headset 108a-fourth VR headset 108d may include a transducer array, a sensor array, a display assembly including one or more display elements, and a controller, and may also optionally include a position sensor, a depth camera assembly (DCA), one or more outward facing cameras, a transceiver, or some combination thereof. Similarly, in some cases, functionality described with reference to the components of the first VR headset 108a-fourth VR headset 108d and/or server 118 may be distributed among the components in a different manner than is described herein. In some examples, the first VR headset 108a-fourth VR headset 108d may be worn on the face of the first user 106a-fourth user 106d such that content (e.g., media content) is presented using a display assembly and/or the transducer array. Examples of media content presented by the headset include one or more images, video, audio, or some combination thereof.

Each of the first VR headset 108a-fourth VR headset 108d may have one or more display elements that present visual content to a user of the first user 106a-fourth user 106d wearing the first VR headset 108a-fourth VR headset 108d. For example, the one or more display elements may be used to render virtual avatars, such as first avatar 132a-fourth avatar 132d, of participants of the conference, and present the second VR space 130 and first VR space 134.

In some examples, the first VR headset 108a-fourth VR headset 108d include a display element for each eye of the first user 106a-fourth user 106d. A display element may be a waveguide display, a liquid crystal display, etc. Note that in some examples, one or both of the display elements are opaque and do not transmit light from a local area around the respective one of the first VR headset 108a-fourth VR headset 108d. The local area is the area surrounding the first VR headset 108a-fourth VR headset 108d. For example, the local area may be a room that a first user 106a-fourth user 106d wearing the first VR headset 108a-fourth VR headset 108d is inside. In some examples, the first user 106a-fourth user 106d may be wearing the respective first VR headset 108a-fourth VR headset 108d outside, therefore the local area may be an outside area. In this context, the first VR headset 108a-fourth VR headset 108d generates VR content. In some examples, one or both of the display elements of each of the first VR headset 108a-fourth VR headset 108d are at least partially transparent, such that light from the local area may be combined with light from the one or more display elements to produce augmented reality (AR) and/or mixed reality (MR) content.

In some examples, each respective headset of the first VR headset 108a-fourth VR headset 108d may include a DCA that determines depth information for a portion of a local area surrounding the respective headset. The DCA includes one or more imaging devices and a DCA controller, and may also include an illuminator. In some examples, the illuminator illuminates a portion of the local area with light. The light may be, e.g., structured light (e.g., dot pattern, bars, etc.) in the infrared (IR), IR flash for time-of-flight, etc. In some examples, the one or more imaging devices capture images of the portion of the local area that include the light from the illuminator. A controller of the DCA computes depth information for the portion of the local area using the captured images and one or more depth determination techniques. The depth determination technique may be, e.g., direct time-of-flight (ToF) depth sensing, indirect ToF depth sensing, structured light, passive stereo analysis, active stereo analysis (uses texture added to the scene by light from the illuminator), some other technique to determine depth of a scene, or some combination thereof.

In some examples, each of the first VR headset 108a-fourth VR headset 108d includes a transducer array that presents sound to a respective user of the first-fourth users first user 106a-fourth user 106d. The transducer array includes a plurality of transducers. A transducer may be a speaker or a tissue transducer (e.g., a bone conduction transducer or a cartilage conduction transducer). In some examples, instead of individual speakers for each ear, each respective headset of the first VR headset 108a-fourth VR headset 108d includes a speaker array comprising multiple speakers integrated into the frame of the respective headset to increase the directionality of presented audio content. The tissue transducer may couple to the head of the respective user and directly vibrates tissue (e.g., bone or cartilage) of the respective user to generate sound. In some examples, the transducer array may include the intelligent electronic devices.

In some examples, each respective VR headset of the first VR headset 108a-fourth VR headset 108d includes a sensor array. The sensor array detects sounds within a local area of the respective VR headset. The sensor array includes a plurality of acoustic sensors. An acoustic sensor captures sounds emitted from one or more sound sources in the local area (e.g., a room). Each acoustic sensor is configured to detect sound and convert the detected sound into an electronic format (analog or digital), such as the first audio data 110a-fourth audio data 110d. The acoustic sensors may be acoustic wave sensors, microphones, sound transducers, or similar sensors that are suitable for detecting sounds. The number and/or locations of acoustic sensors may be determined in order to optimize the amount of audio information collected and the sensitivity and/or accuracy of the information. The acoustic detection locations may be oriented such that the microphone is able to detect sounds in a wide range of directions surrounding a respective user of the first user 106a-fourth user 106d wearing the respective VR headset. For example, the sensor array may detect sounds from the local area, the sounds including sounds from other users of the first user 106a-fourth user 106d who are colocated with the respective user, background noise, etc.

In some examples, each respective VR headset of the first VR headset 108a-fourth VR headset 108d includes a position sensor that generates one or more measurement signals in response to motion of the respective VR headset. The position sensor may include an inertial measurement unit (IMU). Examples of position sensor include one or more accelerometers, one or more gyroscopes, one or more magnetometers, another suitable type of sensor that detects motion, a type of sensor used for error correction of the IMU, a global positioning system (GPS) sensor, or some combination thereof. The position sensor may be located external to an IMU, internal to an IMU, or some combination thereof.

In some examples, each respective headset of the first VR headset 108a-fourth VR headset 108d may provide for simultaneous localization and mapping (SLAM) for a position of the respective headset and updating of a model of the local area. For example, the respective headset may include a passive camera assembly (PCA) that generates color image data. The PCA may include one or more red-green-blue (RGB) cameras that capture images of some or all of the local area. In some examples, some or all of the imaging devices of the DCA may also function as the PCA. The images captured by the PCA and the depth information determined by the DCA may be used to determine parameters of the local area, generate a model of the local area, update a model of the local area, or some combination thereof. Furthermore, the position sensor tracks the position (e.g., location and pose) of the respective VR headset within the room.

In some examples, each respective VR headset of the first VR headset 108a-fourth VR headset 108d may also have identifying information that may be visible to others in the local area. The identifying information is unique to the respective VR headset, and allows the respective VR headset to be tied to a respective user of the first user 106a-fourth user 106d. The identifying information may be an identifier, a QR code, some other information that uniquely identifies the headset, or some combination thereof.

In some examples, each respective VR headset of the first VR headset 108a-fourth VR headset 108d includes a transceiver. The transceiver may broadcast information within the local area. For example, the transceiver may broadcast a headset identifier, a conference identifier, etc., into the local area. In a similar manner, the transceiver may receive information from the local area that was broadcast by some other VR headset of the first VR headset 108a-fourth VR headset 108d. In some examples, the transceiver broadcasts and/or receives information using a local network (e.g., BLUETOOTH, WiFi, etc.). A controller of the respective VR headset processes information from the sensor array that describes sound detected by the sensor array. The controller may comprise a processor and a computer-readable storage medium. The controller may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers, or some combination thereof.

The controller is configured to determine whether sounds detected by the sensor array correspond to a user of the first user 106a-fourth user 106d who is co-located with the respective user of the first user 106a-fourth user 106d associated with the respective user in the local area. In some examples, the determination is based in part on comparing the detected sounds to received audio streams of each of the first user 106a-fourth user 106d as noted above.

Examples may include or be implemented in conjunction with an artificial reality system. Artificial reality is a form of reality that has been adjusted in some manner before presentation to a user, which may include, e.g., a VR, an AR, a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, in some examples, artificial reality may also be associated with applications, products, accessories, services, or some combination thereof, that are used to create content in an artificial reality and/or are otherwise used in an artificial reality. The artificial reality system that provides the artificial reality content may be implemented on various platforms, including a wearable device (e.g., headset) connected to a host computer system, a standalone wearable device (e.g., headset), a mobile device or computing system, or any other hardware platform capable of providing artificial reality content to one or more viewers of the first user 106a-fourth user 106d.

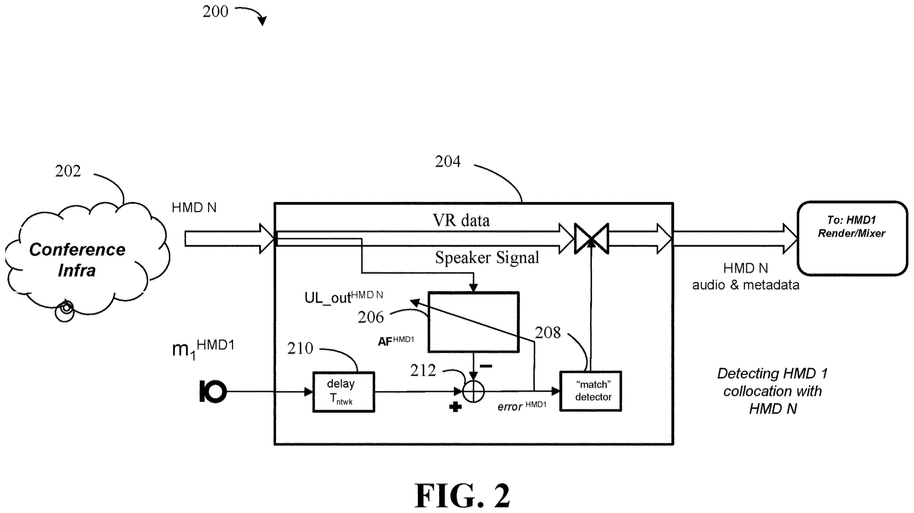

Turning now to FIG. 2, a first AF based colocation detector 200 is illustrated. First AF based colocation detector 200 may be incorporated into and/or implement one or more aspects of networked communication architecture 100 (FIGS. 1A-1D), already discussed. The AF based colocation detector 200 is set up for system identification and is intended to find a matching signal target (e.g., output and/or data from Nth user labeled as HMD N) within a signal mix (e.g., microphone signal of user 1 labeled as m₁^{HMD1}) to determine whether users 1 and N are physically colocated. For HMD 1 of a first user, the microphone m1 obtains a mix of all the physically colocated users' signals, and outputs as much as m₁ HMD1. A conference infrastructure 202 supplies the output O of HMD N. The output O of HMD N contains the audio output from the Uplink(UL)/capture path for sound labeled UL_out^{HMDN}, as well as metadata to appropriately render the users' voice in the shared space in VR. The uplink is used in the telecommunications field denotes the sending (transmitting) side of the equipment. Uplink means the output of the respective HMD (mic to capture pipe processing to audio codec to data sent to all other HMDs). The uplink output of HMD N, UL_out is the audio capture signal from the Nth user, and the audio capture signal is provided to the AF system 204. The audio capture signal is set-up as "reference" or "target" at the input of the AF system 204. An AF 206 may receive the speaker signal that is from the HMD N.

The signal mix of the m₁^{HMD1} is passed through a delay T_{ntwk} 210 and then to a summing junction 212 producing error signal. The summing junction 212 determines a difference between the speaker signal and the signal mix. The AF system 204 may determine if the user N and first user are colocated with a match detector 208, operating on the error output from the summing junction 212 (or on the filter weights if the match detector 208 is a machine learning model) and triggers a pass/block decision for the Nth HMD uplink audio output and metadata. Upon target detection, which is indicative of colocation, the output from the Nth HMD is blocked, and all others are sent to the HMD's render engine for playback.

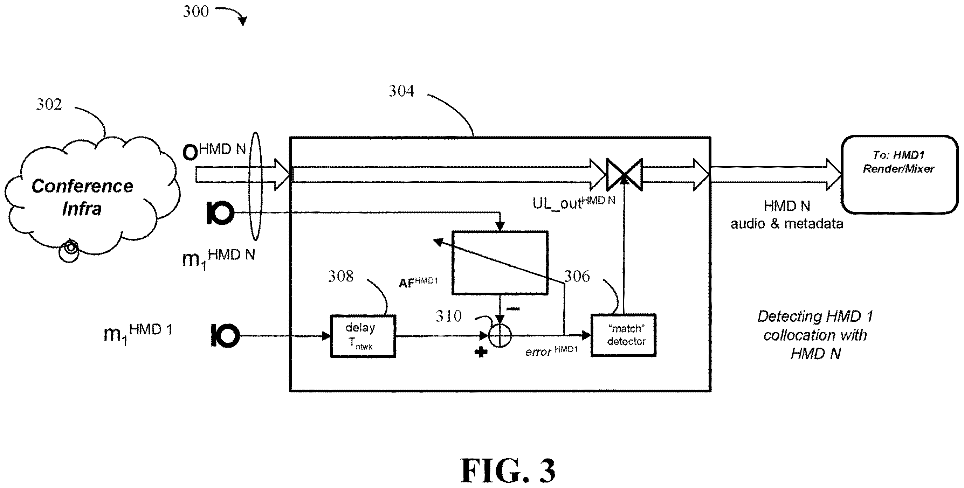

FIG. 3 illustrates a second AF based colocation detector 300. Second AF based colocation detector 300 may be incorporated into and/or implement one or more aspects of networked communication architecture 100 (FIGS. 1A-1D), and/or first AF based colocation detector 200 (FIG. 2), already discussed. The second AF based colocation detector 300 is set up for system identification, and is intended to find a coherence between two signals (e.g., microphones from two different users, user 1 and user N) each containing a signal mix, to determine whether users 1 and N are physically colocated. In this example, conference infrastructure 302 provides m₁ ^{HMD N} (signal mix of user N) and m₁ ^{HMD 1} (signal mix for user 1). For HMD 1, microphone m1 contains a mix of all the physically colocated users' voice signals, which is provided as m₁ ^{HMD 1}. The output O of HMD N, shown as m₁ ^{HMD N}, contains the audio output from the UL/capture path, and the HMD N contains metadata needed to appropriately render this users' voice in the shared space in VR. The microphone output of HMD N, is the microphone signal from the N user, and this signal, shown as m₁ ^{HMD N}, is set-up as "reference" or "target" at the input of AF 304. The m₁ ^{HMD 1} is passed through a delay T_{ntwk} 308 and then to a summing junction producing error signal 310. The summing junction producing error signal 310 determines a difference between the m₁ ^{HMD 1} and the m₁ ^{HMD N} signal mixes. The AF 304 may determine if the user N and first user are colocated with a match detector 306, operating on the error output from the summing junction producing error signal 310 (or on filter weights if the match detector 306 is a machine learning model). Upon target detection, which is indicative of colocation, the output (in particular the voice of the N user) from the Nth HMD is blocked for transmission to the HMD1, while all other voice signals are sent to the render engine.

The second AF based colocation detector 300 uses the raw mic signal mic1 as a reference (e.g., as opposed to using the capture pipe output UL as a reference) to detect colocation. Output O contains UL capture path output (only the HMD user's voice) but also includes the raw mic1 microphone output in addition. This enables observations to be made on the background noise, which is present in the mic, but absent from the capture path. In this this example, the raw mic signal mic1 may be used as a reference (e.g., as opposed to using the capture pipe output UL as a reference) to detect collocation.

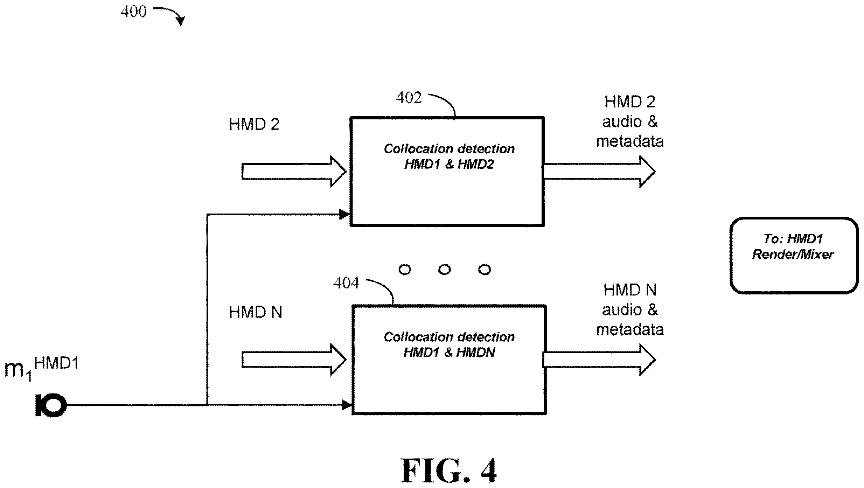

FIG. 4 illustrates a colocation apparatus 400. Colocation apparatus 400 may be incorporated into and/or implement one or more aspects of networked communication architecture 100 (FIGS. 1A-1D), colocation detector 200 (FIG. 2), and/or second AF based colocation detector 300 (FIG. 3) already discussed.

The colocation apparatus 400 includes a colocation detector for HMD1 compared to HMD2 402-HMDN 404. Upon call setup, for each participant (including users 1-N corresponding to HMD1-HMDN respectively), a colocation detection is executed against every other participant, who is located within a possible close-proximity. Users who capture output streams that are found within the microphone signal of a given HMD are declared "colocated" and audio of the users is no longer rendered/vocalized by a corresponding VR avatar since the voices of the users are received over-the-air. Users who capture output is not detected in the microphone signal for the test HMD are declared "remote" and their audio is rendered by a corresponding avatar, based on the respective stream metadata (e.g., location, orientation, distance b/n users etc.).

The colocation detection apparatus 400 is a process that runs on HMD1, uses the mic1 (m1^{hmd1}) signal and performs detection against each of the HMD 2 through N HMD outputs (be that raw mic or capture outputs). That is, examples compare HMD1 against all other participants 2,3,4...N of HMD1-HMDN.

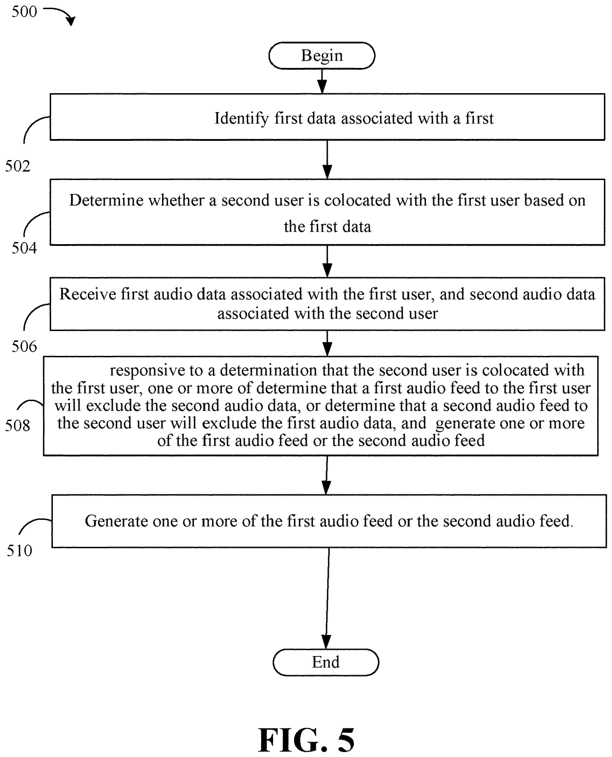

FIG. 5 illustrates a method 500 to determine colocation. One or more aspects of method 500 may be implemented as part of and/or in conjunction with networked communication architecture 100 (FIGS. 1A-1D), colocation detector 200 (FIG. 2), second AF based colocation detector 300 (FIG. 3) and/or colocation apparatus 400 (FIG. 4). Method 500 may be implemented in a computing device, computing system (e.g., hardware, configurable logic, fixed-function logic hardware, at least one computer readable storage medium comprising a set of instructions for execution, etc.).

Illustrated processing block 502 identifies first data associated with a first user. Illustrated processing block 504 determines whether a second user is colocated with the first user based on the first data. Illustrated processing block 506 receives first audio data associated with the first user, and second audio data associated with the second user. Responsive to a determination that the second user is colocated with the first user, illustrated processing block 508 one or more of determines that a first audio feed to the first user will exclude the second audio data, or determines that a second audio feed to the second user will exclude the first audio data. Illustrated processing block 510 generates one or more of the first audio feed or the second audio feed.

In some examples, processing block 504 extracts a first audio signal from the first data and analyze the first audio signal to detect whether the second user is colocated with the first user. In such examples, processing block 504 determines a first speech signal based on the first audio signal, determines a second audio signal associated with the second user, and to determine whether the second user is colocated with the first user, the method 500 includes determining a coherence of the first speech signal and the second audio signal. Further, in some examples, the method 500 determines a second audio signal associated with the second user, determines a first portion of the first audio signal that corresponds to background noise, determines a second portion of the second audio signal that corresponds to background noise, and to determine that the second user is colocated with the first user, the method 500 determines that the first portion matches the second portion.

In some examples, the first data includes first visual data, and the method 500 includes comparing second visual data associated with the second user to the first visual data to determine whether the second user is within the proximity of the first user. In some examples, the first data includes a broadcasted identification information from a computing system associated with the second user, and to determine whether the second user is colocated with the first user, the method 500 includes determining that the broadcasted identification information corresponds to the second user.

In some examples, the first data is an infrastructure-based notification, and to determine whether the second user is colocated with the first user the instructions, the method 500 determines that the infrastructure-based notification includes first identification data that corresponds to a first user device of the first user, and second identification data that corresponds to a second user device of the second user.

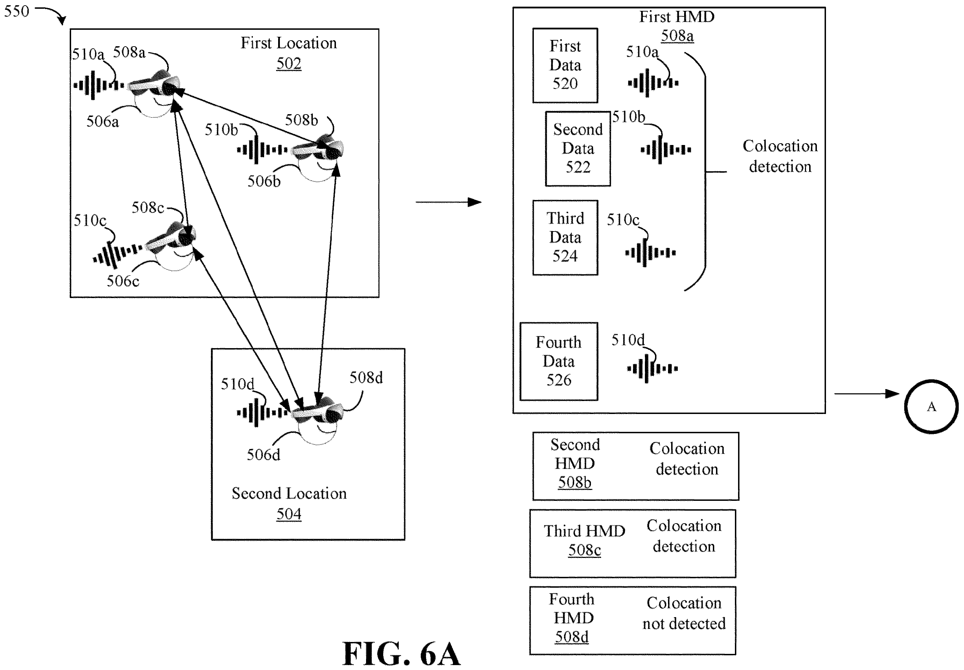

FIGS. 6A-6B illustrate an HMD colocation process architecture 550. One or more aspects of HMD colocation process architecture 550 may be implemented as part of and/or in conjunction with networked communication architecture 100 (FIGS. 1A-1D), colocation detector 200 (FIG. 2), second AF based colocation detector 300 (FIG. 3), colocation apparatus 400 (FIG. 4) and/or method 500 (FIG. 5). In this example, the colocation determination and filtering is distributed to first-fourth HMDs 508a-508d. While the first HMD 508a is described in particular, it will be understood that the second HMD 508b, third HMD 508c and fourth HMD 508d may operate similarly.

The HMD colocation process architecture 550 may operate in a decentralized fashion so that the first HMD 508a-fourth HMD 508d analyze first-fourth data 520, 522, 524, 526 to determine colocation. Furthermore, the first HMD 508a-fourth HMD 508d receive first audio data 510a-fourth audio data 510d and determine whether to emit sounds based on the first audio data 510a-fourth audio data 510d with the speaker arrays 530, 532, 534, 536. That is, each respective audio data of the first audio data 510a-fourth audio data 510d (e.g., voices and metadata) is sent from a respective HMD that captured the respective audio data to every other HMD of the first HMD 508a-fourth HMD 508d. In some examples, a server (not illustrated) may receive and provide the first audio data 510a-fourth audio data 510d to the first HMD 508a-fourth HMD 508d. The first HMD 508a-fourth HMD 508d execute the colocation detection process and determine which of the avatars to vocalize. In detail, some examples may not determine colocation and whether sounds are to be produced based on the first audio data 510a-fourth audio data 510d because end-to-end encryption between the first HMD 508a-fourth HMD 508d may be enabled. In some examples, some of the voices and/or first audio data 510a-fourth audio data 510d maybe be aggregated (e.g., multiple voices and/or multiple of the first audio data 510a-fourth audio data 510d are sent to an HMD of the first HMD 508a-fourth HMD 508d as one stream).

In this example, the first-fourth HMDs 508a-508d communicate directly with each other (or via a server that does not decrypt the encrypted first audio data 510a-fourth audio data 510d and/or first-fourth data 520, 522, 524, 526) to share first data 520, second data 522, third data 524 and fourth data 526. The first data 520 may be similar to the first data 120, the second data 522 may be similar to the second data 122, the third data 524 may be similar to the third data 124, and the fourth data 526 may be similar to the fourth data 126 (FIGS. 1A-1D). Therefore, each of the first-fourth HMDs 508a-508d has a copy of the first data 520, second data 522, third data 524 and fourth data 526 to determine colocation.

The first HMD 508a-fourth HMD 508d may determine whether the first user 506a-fourth user 506d are colocated based on first data 520, second data 522, third data 524 and fourth data 526 that is shared between the first HMD 508a, 508b, third HMD 508c, fourth HMD 508d. For example, each of the first HMD 508a-fourth HMD 508d may include a process, program, and/or thread that is executed on each of the first HMD 508a-fourth HMD 508d that detects colocation as described above with respect to the server 118 (FIGS. 1A-1D). Each of the first HMD 508a-fourth VR headset 508d may execute a service and/or application programming interface performing the colocation detection and mitigation against each of the first user 506a-fourth user 506d or subsets of the first user 506a-fourth user 506d. The process or program that may be executed in the local settings (e.g., router, local area network and/or /wide area network element), network and/or cloud-based element in some examples.

In this example, the first HMD 508a detects that colocation exists based on the first data 520, second data 522, and third data 524. In particular, the first HMD 508a determines that colocation exists between first user 506a, second user 506b and third user 506c, and no colocation exists with the fourth user 506d. The second HMD 508b and third HMD 508c may execute similarly to the first HMD 508a to determine colocation between the first user 506a, second user 506b and third user 506c, and no colocation exists with the fourth user 506d. The fourth HMD 508d may similarly execute to detect no colocation.

In this example, the first HMD 508a may include a microphone to obtain first audio data 510a of the first user 506a. Similarly, the second user 506b wears the second HMD 508b. The second HMD 508b may include a microphone to obtain second audio data 510b of the second user 506b. Likewise, a third user 506c wears the third HMD 508c. The third HMD 508c may include a microphone to obtain third audio data 510c of the third user 506c. Further, a fourth user 506d wears the fourth HMD 508d. The fourth HMD 508d may include a microphone to obtain fourth audio data 510d of the fourth user 506d.

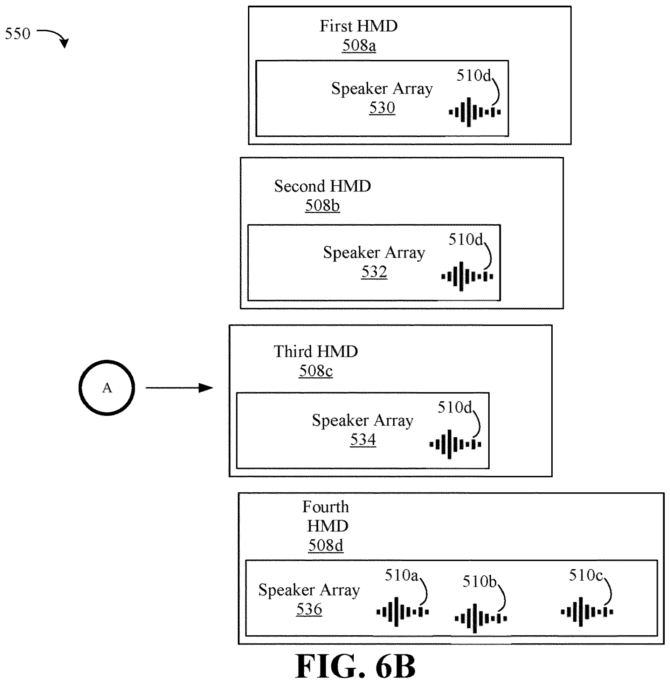

Turning to FIG. 6B, the first HMD 508a-fourth HMD 508d may emit sounds based on the colocation detection and/or non-detection. Thus, similar to networked communication architecture 100, the first HMD 508a-third HMD 508c may each emit sounds based on fourth audio data 510d from the fourth HMD 508d, and bypass emitting sounds based on the first audio data 510a-third audio data 510c since the first user 506a-third user 506c are colocated. The fourth audio data 510d may be a voice signal of the fourth user 506d. The fourth HMD 508d may emit sounds based on the first audio data 510a, second audio data 510b and third audio data 510c based on no colocation being detected between the fourth user 506d and the first user 506a-third user 506c.

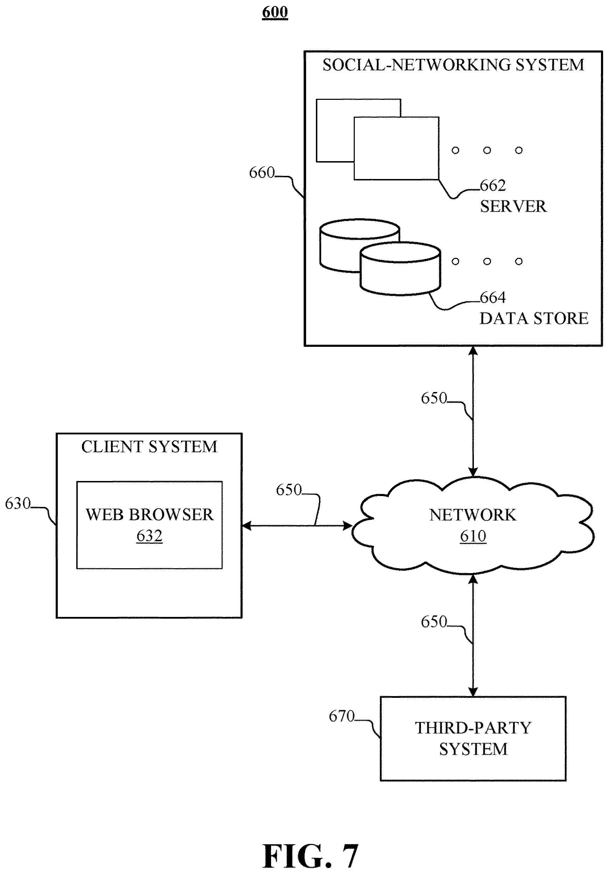

FIG. 7 illustrates an example network environment 600 associated with a social-networking system. Network environment 600 may implement one or more aspects of networked communication architecture 100 (FIGS. 1A-1D), colocation detector 200 (FIG. 2), second AF based colocation detector 300 (FIG. 3), colocation apparatus 400 (FIG. 4), method 500 (FIG. 5) and/or HMD colocation process architecture 550 (FIGS. 6A-6B) already discussed.

Network environment 600 includes a client system 630, a social-networking system 660, and a third-party system 670 connected to each other by a network 610. Although FIG. 7 illustrates a particular arrangement of client system 630, social-networking system 660, third-party system 670, and network 610, this disclosure contemplates any suitable arrangement of client system 630, social-networking system 660, third-party system 670, and network 610. As an example and not by way of limitation, two or more of client system 630, social-networking system 660, and third-party system 670 may be connected to each other directly, bypassing network 610. As another example, two or more of client system 630, social-networking system 660, and third-party system 670 may be physically or logically co-located with each other in whole or in part. Moreover, although FIG. 7 illustrates a particular number of client systems 630, social-networking systems 660, third-party systems 670, and networks 610, this disclosure contemplates any suitable number of client systems 630, social-networking systems 660, third-party systems 670, and networks 610. As an example and not by way of limitation, network environment 600 may include multiple client system 630, social-networking systems 660, third-party systems 670, and networks 610.

This disclosure contemplates any suitable network 610. As an example and not by way of limitation, one or more portions of network 610 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 610 may include one or more networks 610.

Links 650 may connect client system 630, social-networking system 660, and third-party system 670 to communication network 610 or to each other. This disclosure contemplates any suitable links 650. In particular examples, one or more links 650 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular examples, one or more links 650 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 650, or a combination of two or more such links 650. Links 650 need not necessarily be the same throughout network environment 600. One or more first links 650 may differ in one or more respects from one or more second links 650.

In particular examples, client system 630 may be an electronic device including hardware, software, or embedded logic components or a combination of two or more such components and capable of carrying out the appropriate functionalities implemented or supported by client system 630. As an example and not by way of limitation, a client system 630 may include a computer system such as a desktop computer, notebook or laptop computer, netbook, a tablet computer, e-book reader, GPS device, camera, personal digital assistant (PDA), handheld electronic device, cellular telephone, smartphone, augmented/virtual reality device, other suitable electronic device, or any suitable combination thereof. This disclosure contemplates any suitable client systems 630. A client system 630 may enable a network user at client system 630 to access network 610. A client system 630 may enable its user to communicate with other users at other client systems 630.

In particular examples, client system 630 may include a web browser 632, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 630 may enter a Uniform Resource Locator (URL) or other address directing the web browser 632 to a particular server (such as server 662, or a server associated with a third-party system 670), and the web browser 632 may generate a Hyper Text Transfer Protocol (HTTP) request and communicate the HTTP request to server. The server may accept the HTTP request and communicate to client system 630 one or more Hyper Text Markup Language (HTML) files responsive to the HTTP request. Client system 630 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular examples, social-networking system 660 may be a network-addressable computing system that may host an online social network. Social-networking system 660 may generate, store, receive, and send social-networking data, such as, for example, user-profile data, concept-profile data, social-graph information, or other suitable data related to the online social network. Social-networking system 660 may be accessed by the other components of network environment 600 either directly or via network 610. As an example and not by way of limitation, client system 630 may access social-networking system 660 using a web browser 632, or a native application associated with social-networking system 660 (e.g., a mobile social-networking application, a messaging application, another suitable application, or any combination thereof) either directly or via network 610. In particular examples, social-networking system 660 may include one or more servers 662. Each server 662 may be a unitary server or a distributed server spanning multiple computers or multiple datacenters. Servers 662 may be of various types, such as, for example and without limitation, web server, news server, mail server, message server, advertising server, file server, application server, exchange server, database server, proxy server, another server suitable for performing functions or processes described herein, or any combination thereof. In particular examples, each server 662 may include hardware, software, or embedded logic components or a combination of two or more such components for carrying out the appropriate functionalities implemented or supported by server 662. In particular examples, social-networking system 660 may include one or more data stores 664. Data stores 664 may be used to store various types of information. In particular examples, the information stored in data stores 664 may be organized according to specific data structures. In particular examples, each data store 664 may be a relational, columnar, correlation, or other suitable database. Although this disclosure describes or illustrates particular types of databases, this disclosure contemplates any suitable types of databases. Particular examples may provide interfaces that enable a client system 630, a social-networking system 660, or a third-party system 670 to manage, retrieve, modify, add, or delete, the information stored in data store 664.

In particular examples, social-networking system 660 may store one or more social graphs in one or more data stores 664. In particular examples, a social graph may include multiple nodes-which may include multiple user nodes (each corresponding to a particular user) or multiple concept nodes (each corresponding to a particular concept)- and multiple edges connecting the nodes. Social-networking system 660 may provide users of the online social network the ability to communicate and interact with other users. In particular examples, users may join the online social network via social-networking system 660 and then add connections (e.g., relationships) to a number of other users of social-networking system 660 to whom they want to be connected. Herein, the term "friend" may refer to any other user of social-networking system 660 with whom a user has formed a connection, association, or relationship via social-networking system 660.

In particular examples, social-networking system 660 may provide users with the ability to take actions on various types of items or objects, supported by social-networking system 660. As an example and not by way of limitation, the items and objects may include groups or social networks to which users of social-networking system 660 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 660 or by an external system of third-party system 670, which is separate from social-networking system 660 and coupled to social-networking system 660 via a network 610.

In particular examples, social-networking system 660 may be capable of linking a variety of entities. As an example and not by way of limitation, social-networking system 660 may enable users to interact with each other as well as receive content from third-party systems 670 or other entities, or to allow users to interact with these entities through an application programming interfaces (API) or other communication channels.

In particular examples, a third-party system 670 may include one or more types of servers, one or more data stores, one or more interfaces, including but not limited to APIs, one or more web services, one or more content sources, one or more networks, or any other suitable components, e.g., that servers may communicate with. A third-party system 670 may be operated by a different entity from an entity operating social-networking system 660. In particular examples, however, social-networking system 660 and third-party systems 670 may operate in conjunction with each other to provide social-networking services to users of social-networking system 660 or third-party systems 670. In this sense, social-networking system 660 may provide a platform, or backbone, which other systems, such as third-party systems 670, may use to provide social-networking services and functionality to users across the Internet.

In particular examples, a third-party system 670 may include a third-party content object provider. A third-party content object provider may include one or more sources of content objects, which may be communicated to a client system 630. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular examples, social-networking system 660 also includes user-generated content objects, which may enhance a user's interactions with social-networking system 660. User-generated content may include anything a user may add, upload, send, or "post" to social-networking system 660. As an example and not by way of limitation, a user communicates posts to social-networking system 660 from a client system 630. Posts may include data such as status updates or other textual data, location information, photos, videos, links, music or other similar data or media. Content may also be added to social-networking system 660 by a third-party through a "communication channel," such as a newsfeed or stream.

In particular examples, social-networking system 660 may include a variety of servers, sub-systems, programs, modules, logs, and data stores. In particular examples, social-networking system 660 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 660 may also include suitable components such as network interfaces, security mechanisms, load balancers, failover servers, management-and-network-operations consoles, other suitable components, or any suitable combination thereof. In particular examples, social-networking system 660 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 660 to one or more client systems 630 or one or more third-party system 670 via network 610. The web server may include a mail server or other messaging functionality for receiving and routing messages between social-networking system 660 and one or more client systems 630. An API-request server may allow a third-party system 670 to access information from social-networking system 660 by calling one or more APIs. An action logger may be used to receive communications from a web server about a user's actions on or off social-networking system 660. In conjunction with the action log, a third-party-content-object log may be maintained of user exposures to third-party-content objects. A notification controller may provide information regarding content objects to a client system 630. Information may be pushed to a client system 630 as notifications, or information may be pulled from client system 630 responsive to a request received from client system 630. Authorization servers may be used to enforce one or more privacy settings of the users of social-networking system 660. A privacy setting of a user determines how particular information associated with a user may be shared. The authorization server may allow users to opt in to or opt out of having their actions logged by social-networking system 660 or shared with other systems (e.g., third-party system 670), such as, for example, by setting appropriate privacy settings. Third-party-content-object stores may be used to store content objects received from third parties, such as a third-party system 670. Location stores may be used for storing location information received from client systems 630 associated with users. Advertisement-pricing modules may combine social information, the current time, location information, or other suitable information to provide relevant advertisements, in the form of notifications, to a user.

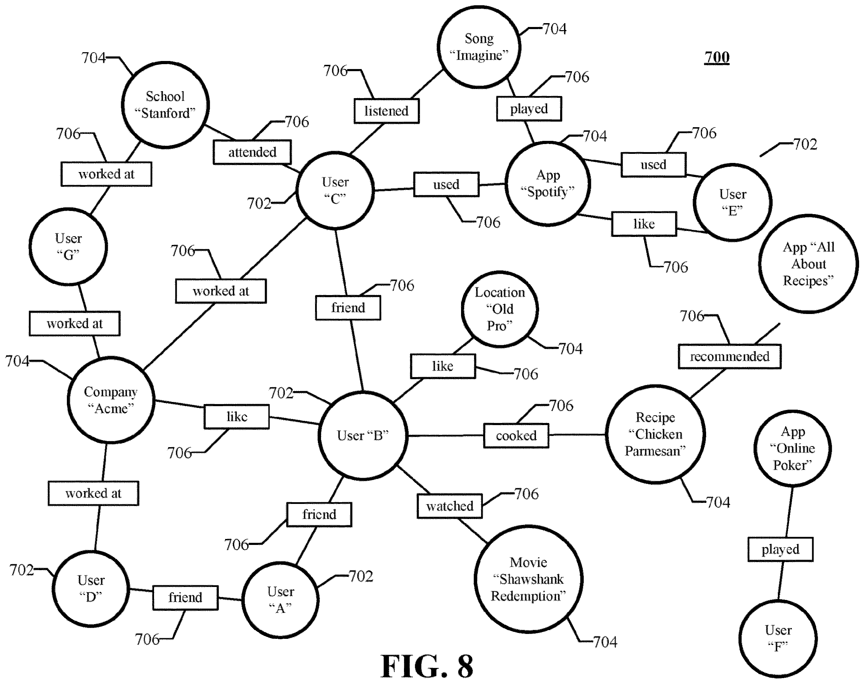

FIG. 8 illustrates example social graph 700. In some examples, networked communication architecture 100 (FIGS. 1A-1D), colocation detector 200 (FIG. 2), second AF based colocation detector 300 (FIG. 3), colocation apparatus 400 (FIG. 4), method 500 (FIG. 5) and/or HMD colocation process architecture 550 (FIGS. 6A-6B) already discussed already discussed may access social graph 700 to implement one or more aspects.

In particular examples, social-networking system 660 may store one or more social graphs 700 in one or more data stores. In particular examples, social graph 700 may include multiple nodes-which may include multiple user nodes 702 or multiple concept nodes 704-and multiple edges 706 connecting the nodes. Each node may be associated with a unique entity (i.e., user or concept), each of which may have a unique identifier (ID), such as a unique number or username. Example social graph 700 illustrated in FIG. 8 is shown, for didactic purposes, in a two-dimensional visual map representation. In particular examples, a social-networking system 660, client system 630, or third-party system 670 may access social graph 700 and related social-graph information for suitable applications. The nodes and edges of social graph 700 may be stored as data objects, for example, in a data store (such as a social-graph database). Such a data store may include one or more searchable or queryable indexes of nodes or edges of social graph 700.

In particular examples, a user node 702 may correspond to a user of social-networking system 660. As an example and not by way of limitation, a user may be an individual (human user), an entity (e.g., an enterprise, business, or third-party application), or a group (e.g., of individuals or entities) that interacts or communicates with or over social-networking system 660. In particular examples, when a user registers for an account with social-networking system 660, social-networking system 660 may create a user node 702 corresponding to the user, and store the user node 702 in one or more data stores. Users and user nodes 702 described herein may, where appropriate, refer to registered users and user nodes 702 associated with registered users. In addition or as an alternative, users and user nodes 702 described herein may, where appropriate, refer to users that have not registered with social-networking system 660. In particular examples, a user node 702 may be associated with information provided by a user or information gathered by various systems, including social-networking system 660. As an example and not by way of limitation, a user may provide his or her name, profile picture, contact information, birth date, sex, marital status, family status, employment, education background, preferences, interests, or other demographic information. In particular examples, a user node 702 may be associated with one or more data objects corresponding to information associated with a user. In particular examples, a user node 702 may correspond to one or more webpages.

In particular examples, a concept node 704 may correspond to a concept. As an example and not by way of limitation, a concept may correspond to a place (such as, for example, a movie theater, restaurant, landmark, or city); a website (such as, for example, a website associated with social-network system 660 or a third-party website associated with a web-application server); an entity (such as, for example, a person, business, group, sports team, or celebrity); a resource (such as, for example, an audio file, video file, digital photo, text file, structured document, or application) which may be located within social-networking system 660 or on an external server, such as a web-application server; real or intellectual property (such as, for example, a sculpture, painting, movie, game, song, idea, photograph, or written work); a game; an activity; an idea or theory; an object in a augmented/virtual reality environment; another suitable concept; or two or more such concepts. A concept node 704 may be associated with information of a concept provided by a user or information gathered by various systems, including social-networking system 660. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular examples, a concept node 704 may be associated with one or more data objects corresponding to information associated with concept node 704. In particular examples, a concept node 704 may correspond to one or more webpages.

In particular examples, a node in social graph 700 may represent or be represented by a webpage (which may be referred to as a "profile page"). Profile pages may be hosted by or accessible to social-networking system 660. Profile pages may also be hosted on third-party websites associated with a third-party system 670. As an example and not by way of limitation, a profile page corresponding to a particular external webpage may be the particular external webpage and the profile page may correspond to a particular concept node 704. Profile pages may be viewable by all or a selected subset of other users. As an example and not by way of limitation, a user node 702 may have a corresponding user-profile page in which the corresponding user may add content, make declarations, or otherwise express himself or herself. As another example and not by way of limitation, a concept node 704 may have a corresponding concept-profile page in which one or more users may add content, make declarations, or express themselves, particularly in relation to the concept corresponding to concept node 704.

In particular examples, a concept node 704 may represent a third-party webpage or resource hosted by a third-party system 670. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check-in," "eat," "recommend," or another suitable action or activity. A user viewing the third-party webpage may perform an action by selecting one of the icons (e.g., "check-in"), causing a client system 630 to send to social-networking system 660 a message indicating the user's action. In response to the message, social-networking system 660 may create an edge (e.g., a check-in-type edge) between a user node 702 corresponding to the user and a concept node 704 corresponding to the third-party webpage or resource and store edge 706 in one or more data stores.

In particular examples, a pair of nodes in social graph 700 may be connected to each other by one or more edges 706. An edge 706 connecting a pair of nodes may represent a relationship between the pair of nodes. In particular examples, an edge 706 may include or represent one or more data objects or attributes corresponding to the relationship between a pair of nodes. As an example and not by way of limitation, a first user may indicate that a second user is a "friend" of the first user. In response to this indication, social-networking system 660 may send a "friend request" to the second user. If the second user confirms the "friend request," social-networking system 660 may create an edge 706 connecting the first user's user node 702 to the second user's user node 702 in social graph 700 and store edge 706 as social-graph information in one or more of data stores 664. In the example of FIG. 8, social graph 700 includes an edge 706 indicating a friend relation between user nodes 702 of user "A" and user "B" and an edge indicating a friend relation between user nodes 702 of user "C" and user "B." Although this disclosure describes or illustrates particular edges 706 with particular attributes connecting particular user nodes 702, this disclosure contemplates any suitable edges 706 with any suitable attributes connecting user nodes 702. As an example and not by way of limitation, an edge 706 may represent a friendship, family relationship, business or employment relationship, fan relationship (including, e.g., liking, etc.), follower relationship, visitor relationship (including, e.g., accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 700 by one or more edges 706. The degree of separation between two objects represented by two nodes, respectively, is a count of edges in a shortest path connecting the two nodes in the social graph 700. As an example and not by way of limitation, in the social graph 700, the user node 702 of user "C" is connected to the user node 702 of user "A" via multiple paths including, for example, a first path directly passing through the user node 702 of user "B," a second path passing through the concept node 704 of company "Acme" and the user node 702 of user "D," and a third path passing through the user nodes 702 and concept nodes 704 representing school "Stanford," user "G," company "Acme," and user "D." User "C" and user "A" have a degree of separation of two because the shortest path connecting their corresponding nodes (i.e., the first path) includes two edges 706.

In particular examples, an edge 706 between a user node 702 and a concept node 704 may represent a particular action or activity performed by a user associated with user node 702 toward a concept associated with a concept node 704. As an example and not by way of limitation, as illustrated in FIG. 8, a user may "like," "attended," "played," "listened," "cooked," "worked at," or "watched" a concept, each of which may correspond to an edge type or subtype. A concept-profile page corresponding to a concept node 704 may include, for example, a selectable "check in" icon (such as, for example, a clickable "check in" icon) or a selectable "add to favorites" icon. Similarly, after a user clicks these icons, social-networking system 660 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, social-networking system 660 may create a "listened" edge 706 and a "used" edge (as illustrated in FIG. 7) between user nodes 702 corresponding to the user and concept nodes 704 corresponding to the song and application to indicate that the user listened to the song and used the application. Moreover, social-networking system 660 may create a "played" edge 706 (as illustrated in FIG. 7) between concept nodes 704 corresponding to the song and the application to indicate that the particular song was played by the particular application. In this case, "played" edge 706 corresponds to an action performed by an external application (SPOTIFY) on an external audio file (the song "Imagine"). Although this disclosure describes particular edges 706 with particular attributes connecting user nodes 702 and concept nodes 704, this disclosure contemplates any suitable edges 706 with any suitable attributes connecting user nodes 702 and concept nodes 704. Moreover, although this disclosure describes edges between a user node 702 and a concept node 704 representing a single relationship, this disclosure contemplates edges between a user node 702 and a concept node 704 representing one or more relationships. As an example and not by way of limitation, an edge 706 may represent both that a user likes and has used at a particular concept. Alternatively, another edge 706 may represent each type of relationship (or multiples of a single relationship) between a user node 702 and a concept node 704 (as illustrated in FIG. 8 between user node 702 for user "E" and concept node 704 for "SPOTIFY").

In particular examples, social-networking system 660 may create an edge 706 between a user node 702 and a concept node 704 in social graph 700. As an example and not by way of limitation, a user viewing a concept-profile page (such as, for example, by using a web browser or a special-purpose application hosted by the user's client system 630) may indicate that he or she likes the concept represented by the concept node 704 by clicking or selecting a "Like" icon, which may cause the user's client system 630 to send to social-networking system 660 a message indicating the user's liking of the concept associated with the concept-profile page. In response to the message, social-networking system 660 may create an edge 706 between user node 702 associated with the user and concept node 704, as illustrated by "like" edge 706 between the user and concept node 704. In particular examples, social-networking system 660 may store an edge 706 in one or more data stores. In particular examples, an edge 706 may be automatically formed by social-networking system 660 in response to a particular user action. As an example and not by way of limitation, if a first user uploads a picture, watches a movie, or listens to a song, an edge 706 may be formed between user node 702 corresponding to the first user and concept nodes 704 corresponding to those concepts. Although this disclosure describes forming particular edges 706 in particular manners, this disclosure contemplates forming any suitable edges 706 in any suitable manner.

In particular examples, social-networking system 660 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 670 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular examples, social-networking system 660 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular examples, social-networking system 660 may use a variety of factors to calculate a coefficient. These factors may include, for example, user actions, types of relationships between objects, location information, other suitable factors, or any combination thereof. In particular examples, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular examples, the social-networking system 660 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular examples, social-networking system 660 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular examples, social-networking system 660 may calculate a coefficient based on a user's actions. Social-networking system 660 may monitor such actions on the online social network, on a third-party system 670, on other suitable systems, or any combination thereof. Any suitable type of user actions may be tracked or monitored. Typical user actions include viewing profile pages, creating or posting content, interacting with content, tagging or being tagged in images, joining groups, listing and confirming attendance at events, checking-in at locations, liking particular pages, creating pages, and performing other tasks that facilitate social action. In particular examples, social-networking system 660 may calculate a coefficient based on the user's actions with particular types of content. The content may be associated with the online social network, a third-party system 670, or another suitable system. The content may include users, profile pages, posts, news stories, headlines, instant messages, chat room conversations, emails, advertisements, pictures, video, music, other suitable objects, or any combination thereof. Social-networking system 660 may analyze a user's actions to determine whether one or more of the actions indicate an affinity for subject matter, content, other users, and so forth. As an example and not by way of limitation, if a user frequently posts content related to "coffee" or variants thereof, social-networking system 660 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular examples, social-networking system 660 may calculate a coefficient based on the type of relationship between particular objects. Referencing the social graph 700, social-networking system 660 may analyze the number and/or type of edges 706 connecting particular user nodes 702 and concept nodes 704 when calculating a coefficient. As an example and not by way of limitation, user nodes 702 that are connected by a spouse-type edge (representing that the two users are married) may be assigned a higher coefficient than user nodes 702 that are connected by a friend-type edge. In other words, depending upon the weights assigned to the actions and relationships for the particular user, the overall affinity may be determined to be higher for content about the user's spouse than for content about the user's friend. In particular examples, the relationships a user has with another object may affect the weights and/or the ratings of the user's actions with respect to calculating the coefficient for that object. As an example and not by way of limitation, if a user is tagged in a first photo, but merely likes a second photo, social-networking system 660 may determine that the user has a higher coefficient with respect to the first photo than the second photo because having a tagged-in-type relationship with content may be assigned a higher weight and/or rating than having a like-type relationship with content. In particular examples, social-networking system 660 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, social-networking system 660 may determine that the first user should also have a relatively high coefficient for the particular object. In particular examples, the coefficient may be based on the degree of separation between particular objects. The lower coefficient may represent the decreasing likelihood that the first user will share an interest in content objects of the user that is indirectly connected to the first user in the social graph 700. As an example and not by way of limitation, social-graph entities that are closer in the social graph 700 (i.e., fewer degrees of separation) may have a higher coefficient than entities that are further apart in the social graph 700.

In particular examples, social-networking system 660 may calculate a coefficient based on location information. Objects that are geographically closer to each other may be considered to be more related or of more interest to each other than more distant objects. In particular examples, the coefficient of a user towards a particular object may be based on the proximity of the object's location to a current location associated with the user (or the location of a client system 630 of the user). A first user may be more interested in other users or concepts that are closer to the first user. As an example and not by way of limitation, if a user is one mile from an airport and two miles from a gas station, social-networking system 660 may determine that the user has a higher coefficient for the airport than the gas station based on the proximity of the airport to the user.

In particular examples, social-networking system 660 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, social-networking system 660 may provide information that is relevant to user's interests and current circumstances, increasing the likelihood that they will find such information of interest. In particular examples, social-networking system 660 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular examples, social-networking system 660 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular examples, social-networking system 660 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 670 (e.g., via an API or other communication channel), or from another suitable system. In response to the request, social-networking system 660 may calculate the coefficient (or access the coefficient information if it has previously been calculated and stored). In particular examples, social-networking system 660 may measure an affinity with respect to a particular process. Different processes (both internal and external to the online social network) may request a coefficient for a particular object or set of objects. Social-networking system 660 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular examples may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, filed 01 October 2012, each of which is incorporated by reference.

In particular examples, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) may be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page that identify a set of users that may access the work experience information on the user-profile page, thus excluding other users from accessing the information. In particular examples, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular examples, privacy settings may be associated with particular social-graph elements. Privacy settings of a social-graph element, such as a node or an edge, may specify how the social-graph element, information associated with the social-graph element, or content objects associated with the social-graph element may be accessed using the online social network. As an example and not by way of limitation, a particular concept node 704 corresponding to a particular photo may have a privacy setting specifying that the photo may only be accessed by users tagged in the photo and their friends. In particular examples, privacy settings may allow users to opt in or opt out of having their actions logged by social-networking system 660 or shared with other systems (e.g., third-party system 670). In particular examples, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 670, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular examples, one or more servers 662 may be authorization/privacy servers for enforcing privacy settings. In response to a request from a user (or other entity) for a particular object stored in a data store 664, social-networking system 660 may send a request to the data store 664 for the object. The request may identify the user associated with the request and may only be sent to the user (or a client system 630 of the user) if the authorization server determines that the user is authorized to access the object based on the privacy settings associated with the object. If the requesting user is not authorized to access the object, the authorization server may prevent the requested object from being retrieved from the data store 664, or may prevent the requested object from being sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

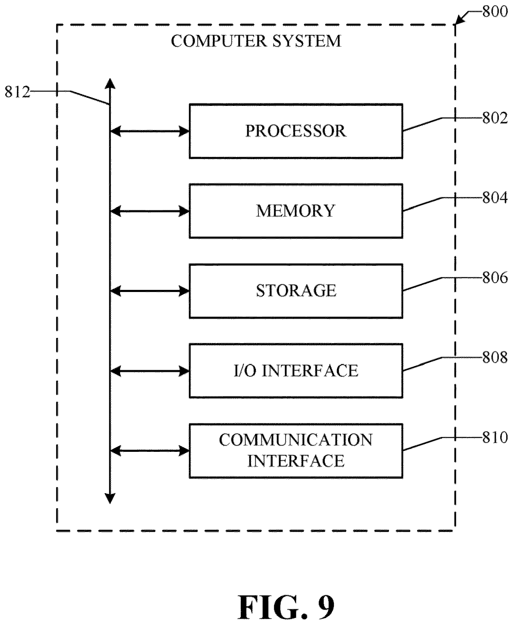

FIG. 9 illustrates an example computer system 800. The system 800 may implement one or more aspects of networked communication architecture 100 (FIGS. 1A-1D), colocation detector 200 (FIG. 2), second AF based colocation detector 300 (FIG. 3), colocation apparatus 400 (FIG. 4), method 500 (FIG. 5) and/or and/or HMD colocation process architecture 550 (FIGS. 6A-6B) already discussed.

In particular examples, one or more computer systems 800 perform one or more steps of one or more methods described or illustrated herein. In particular examples, one or more computer systems 800 provide functionality described or illustrated herein. In particular examples, software running on one or more computer systems 800 performs one or more steps of one or more methods described or illustrated herein or provides functionality described or illustrated herein. Particular examples include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular examples, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular examples, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular examples, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular examples, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multi-core processor; or include one or more processors 802. Although this disclosure describes and illustrates a particular processor, this disclosure contemplates any suitable processor.

In particular examples, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular examples, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular examples, one or more memory management units (MMUs) reside between processor 802 and memory 804 and facilitate accesses to memory 804 requested by processor 802. In particular examples, memory 804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular examples, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular examples, storage 806 is non-volatile, solid-state memory. In particular examples, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular examples, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular examples, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular examples, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Examples are applicable for use with all types of semiconductor integrated circuit ("IC") chips. Examples of these IC chips include but are not limited to processors, controllers, chipset components, programmable logic arrays (PLAs), memory chips, network chips, systems on chip (SOCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary examples to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although examples are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the examples. Further, arrangements may be shown in block diagram form in order to avoid obscuring examples, and also in view of the fact that specifics with respect to implementation of such block diagram arrangements are highly dependent upon the computing system within which the example is to be implemented, i.e., such specifics should be well within purview of one skilled in the art. Where specific details (e.g., circuits) are set forth in order to describe example examples, it should be apparent to one skilled in the art that examples may be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A; B; C; A and B; A and C; B and C; or A, B and C.

Those skilled in the art will appreciate from the foregoing description that the broad techniques of the examples may be implemented in a variety of forms. Therefore, while the examples have been described in connection with particular examples thereof, the true scope of the examples should not be so limited since other modifications will become apparent to the skilled practitioner upon a study of the drawings, specification, and following claims.

The foregoing description of the examples has been presented for illustration; it is not intended to be exhaustive or to limit the patent rights to the precise forms disclosed. Persons skilled in the relevant art can appreciate that many modifications and variations are possible considering the above disclosure.

Some portions of this description describe the examples in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all the steps, operations, or processes described.

Examples may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples may also relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
identifying first data associated with a first user;
determining whether a second user is colocated with the first user based on the first data;
receiving first audio data associated with the first user, and second audio data associated with the second user; and
responsive to a determination that the second user is colocated with the first user,
one or more of determining that a first audio feed to the first user will exclude the second audio data, or determining that a second audio feed to the second user will exclude the first audio data, and
generating one or more of the first audio feed or the second audio feed.

2. The method of claim 1, wherein determining whether the second user is colocated with the first user comprises:
extracting a first audio signal from the first data and analyzing the first audio signal to detect whether the second user is colocated with the first user.

3. The method of claim 2, further comprising:
determining a first speech signal based on the first audio signal; and
determining a second audio signal associated with the second user based on second data associated with the second user;
wherein determining whether the second user is colocated with the first user comprises determining a similarity of the first speech signal and the second audio signal.

4. The method of claim 2 or 3, further comprising:
determining a second audio signal associated with the second user based on second data associated with the second user;
determining a first portion of the first audio signal that corresponds to background noise; and
determining a second portion of the second audio signal that corresponds to background noise;
wherein determining whether the second user is colocated with the first user comprises determining whether the first portion matches the second portion.

5. The method of any preceding claim, wherein the first data includes first visual data,
wherein determining whether the second user is colocated with the first user comprises comparing second data associated with the second user to the first visual data.

6. The method of any preceding claim, wherein the first data includes a broadcasted identification information from a computing system associated with the second user,
wherein determining whether the second user is colocated with the first user comprises determining that the broadcasted identification information corresponds to the second user.

7. The method of any preceding claim, wherein the first data is an infrastructure-based notification,
wherein to determine whether the second user is colocated with the first user, the method further comprises determining that the infrastructure-based notification includes first identification data that corresponds to a first user device of the first user, and second identification data that corresponds to a second user device of the second user.

8. The method of claim 7, wherein the method further comprises determining whether to execute colocation detection and mitigation based on a selection by one or more of the first user or the second user.

9. At least one computer readable storage medium comprising a set of instructions which, when executed by a computing device, cause the computing device to carry out the method of any preceding claim.

10. A system comprising:
one or more processors; and
a memory coupled to the one or more processors, the memory comprising instructions executable by the one or more processors, the one or more processors being operable when executing the instructions to carry out the method of any of claims 1 to 8.

11. A computer program product comprising instructions which, when the program is executed by a computer, cause the computer to carry out the method of any of claims 1 to 8.
